# EUROPÄISCHE PATENTSCHRIFT

(11) **EP 0 669 700 B1**
(45) Veröffentlichungstag und Bekanntmachung des Hinweises auf die Patenterteilung: **03.02.1999**
(21) Anmeldenummer: 95200358.0
(22) Anmeldetag: 15.02.1995
(51) Int. Cl.: H02K 49/10, F04D 13/02

(54) **Magnetisches Getriebe mit mehreren magnetisch zusammenwirkenden, relativ zueinander beweglichen Teilen**
Magnetic gearing with a plurality of magnetically cooperating parts that move with respect to each other
Engrenage magnétique avec plusieurs pièces qui coopérent magnétiquement et qui se déplacent les unes par rapport aux autres

(30) Priorität: 23.02.1994 DE 4405701
(43) Veröffentlichungstag der Anmeldung: 30.08.1995
(73) Patentinhaber: Philips Patentverwaltung GmbH, 22335 Hamburg (DE); Koninklijke Philips Electronics N.V., 5621 BA Eindhoven (NL)
(72) Erfinder: Ackermann, Bernd, Dr., c/o Philips, D-20097 Hamburg (DE); Honds, Leo, c/o Philips, D-20097 Hamburg (DE)
(74) Vertreter: von Laue, Hanns-Ulrich, Dipl.-Ing.

(56) Entgegenhaltungen:
- US-A- 3 301 091
- US-A- 3 378 710
- US-A- 3 645 650
- US-A- 3 762 839

## Beschreibung

Die Erfindung bezieht sich auf ein magnetisches Getriebe mit mehreren magnetisch zusammenwirkenden, relativ zueinander beweglichen Teilen, von denen eines mit einer Antriebswelle, eines mit einer Abtriebswelle verbunden ist und eines feststeht, wobei die von Permanentmagneten erzeugten Felder durch weichmagnetische, flußführende Teile moduliert werden, von denen wenigstens eines ein gezahntes Eisenjoch ist, wobei
a) sich auf beiden Seiten des Eisenjoches Gebilde befinden, die auf der dem Eisenjoch zugewandten Seite mittels Permanentmagneten Magnetfelder erzeugen, die längs des Umfanges abwechselnd Nord- und Südpole aufweisen,
b) das Gebilde auf der einen Seite pₗ Paare von Nord- und Südpolen aufweist, wobei das Eisenjoch auf der diesem Gebilde zugewandten Seite Z₁=p₁ ± N Zähne hat und N eine ganze Zahl ist, N=1,2,3...,
c) das Gebilde auf der anderen Seite p₂ Paare von Nord- und Südpolen aufweist, wobei das Eisenjoch auf der diesem Gebilde zugewandten Seite Z₂=p₂ ± M Zähne hat, wobei M eine ganze Zahl (M=1,2,3...) und M gleich N ist.

Ein derartiges magnetisches Getriebe ist aus der US 3,645,650 bekannt. Dieses bekannte magnetische Getriebe weist zwei konzentrisch zueinander angeordnete Polringe auf, die jeweils wenigstens ein Paar von permanentmagnetischen Polen aufweisen. Zwischen den beiden Polringen ist ein magnetisch passiver Eisenring angeordnet, der Zähne aufweist, die die von den Permanentmagneten der Polringe erzeugten magnetischen Felder modulieren. Der Eisenring ist mehrstückig ausgebildet und weist dementsprechend wenigstens zwei Teilstücke auf.

Dieses bekannte magnetische Getriebe hat den Nachteil, daß es relativ große Drehmomentschwankungen aufweist.

Es ist Aufgabe der Erfindung, ein magnetisches Getriebe der eingangs genannten Art zu schaffen, das einen gleichmäßigeren Verlauf des Drehmomentes aufweist.

Dies wird erfindungsgemäß dadurch gelöst, daß die Zähne auf dem Eisenjoch gleichmäßig über den Umfang verteilt sind.

Dadurch ergibt sich ein gleichmäßiger Verlauf des Drehmomentes.

Nach einer vorteilhaften Ausgestaltung der Erfindung ist vorgesehen, daß die Paare von Nord- und Südpolen gleichmäßig über den Umfang der Gebilde verteilt sind. Dadurch wird ein noch gleichmäßigerer Verlauf des Drehmomentes erreicht.

Nach einer weiteren Ausgestaltung der Erfindung ist vorgeseshen, daß das Eisenjoch und die Gebilde konzentrisch zueinander angeordnet sind. Dadurch wird eine über dem gesamten Umfang maximale magnetische Kopplung der Teile miteinander erreicht.

Nach einer weiteren Ausgestaltung der Erfindung ist vorgesehen, daß für den Fall einer Kombination von p₁ gleich N oder p₂ gleich M die Zahl der Zähne des Eisenjoches auf dieser Seite Null ist.

Nach einer weiteren Ausgestaltung der Erfindung ist vorgesehen, daß das Eisenjoch feststeht. Das Eisenteil kann dann Teil einer Trennwand z.B. beim Übertragen eines Drehmomentes in ein Vakuum hinein sein. Dadurch wird neben der Getriebefunktion gleichzeitig die einer magnetischen Kupplung erfüllt. Bei einer herkömmlichen magnetischen Kupplung schwächt die Trennwand die magnetischen Kopplungskräfte, wogegen sie hier aktiv bei der Kopplung mitwirkt.

Nach einer weiteren Ausgestaltung der Erfindung ist vorgesehen, daß eines der beiden mittels Permanentmagneten Magnetfelder erzeugenden Gebilde feststeht. Wenn beispielsweise das äußere Gebilde feststeht, so ist es gleichzeitig als Gehäusewand einsetzbar.

Nach einer weiteren Ausgestaltung der Erfindung ist vorgesehen, daß die Magnetfelder in den Luftspalten beiderseits des Eisenjoches überwiegend radial verlaufen. Dadurch kompensieren sich die jeweils am Eisenjoch und an den äußeren Gebilden angreifenden Kräfte weitgehend.

Nach einer weiteren Ausgestaltung der Erfindung ist vorgesehen, daß die Magnetfelder in den Luftspalten beiderseits des Eisenjoches überwiegend axial verlaufen. Dies ermöglicht eine besonders flache Bauweise.

Die Erfindung wird anhand der Zeichnungen näher erläutert.

Es zeigen:
Fig. 1 ein magnetisches Getriebe mit zwei Gebilden, von denen das innere von einer Antriebswelle gedreht wird, die auf der dem zwischen ihnen liegenden Eisenjoch zugewandten Seite mittels Permanentmagneten Magnetfelder erzeugen, die längs des Umfanges abwechselnd Nord- und Südpole aufweisen, wobei entweder das Eisenjoch oder das äußere Gebilde feststeht und das nicht feststehende Teil mit einer Abtriebswelle verbunden ist,
Fig. 2a bis j den Bewegungsablauf des magnetischen Getriebes nach Fig. 1 bei feststehendem Eisenjoch,
Fig. 3a bis k den Bewegungsablauf des magnetischen Getriebes nach Fig. 1 bei festehendem äußeren Gebilde,
Fig. 4 ein magnetisches Getriebe nach Fig. 1 mit dem Unterschied, daß das äußere Gebilde ein Paar von Nord- und Südpolen weniger aufweist,
Fig. 5a bis j den Bewegungsablauf des magnetischen Getriebes nach Fig. 4 bei feststehendem Eisenjoch; dieser unterscheidet sich von dem in Fig. 2 gezeigten Bewegungsablauf dadurch, daß die Drehrichtung des äußeren Gebildes umgedreht ist,
Fig. 6 eine abgewandelte Ausführungsform von Fig. 4, wobei das Eisenjoch jetzt auch auf seiner Innenseite mit Zähnen versehen ist,
Fig. 7a bis g den Bewegungsablauf des magnetischen Getriebes nach Fig. 6 bei feststehendem Eisenjoch,
Fig. 8 in Bezug auf Fig. 1 ein Diagramm der Radialkomponente des magnetischen Feldes, das vom inneren Gebilde auf der Innenseite des Eisenjoches erzeugt wird, als Funktion des Umfangswinkels,
Fig. 9 in Bezug auf Fig. 1 ein Diagramm der Radialkomponente des magnetischen Feldes, das vom inneren Gebilde auf der Außenseite des Eisenjoches erzeugt wird, als Funktion des Umfangswinkels; dieses entsteht aus dem in Fig. 8 gezeigten Magnetfeld aufgrund der Modulation des Feldes durch das gezahnte Eisenjoch,
Fig. 10 in Bezug auf Fig. 1 ein Diagramm der Radialkomponente des magnetischen Feldes, das vom äußeren Gebilde auf seiner Innenseite erzeugt wird, als Funktion des Umfangswinkels; eine evtl. Verzerrung aufgrund der Verzahnung des Eisenjochs ist der Deutlichkeit halber weggelassen,
Fig. 11 gleichzeitig die Radialkomponenten der magnetischen Felder, die aufgrund der Wirkung des äußeren Gebildes (vergl. hierzu Fig. 10) und des inneren Gebildes (vergl. hierzu Fig. 9) im Luftspalt zwischen äußerem Gebilde und Eisenjoch entstehen; hierbei ist zu erkennen, daß jeweils an denselben Positionen entlang des Umfanges Feldspitzen auftreten.

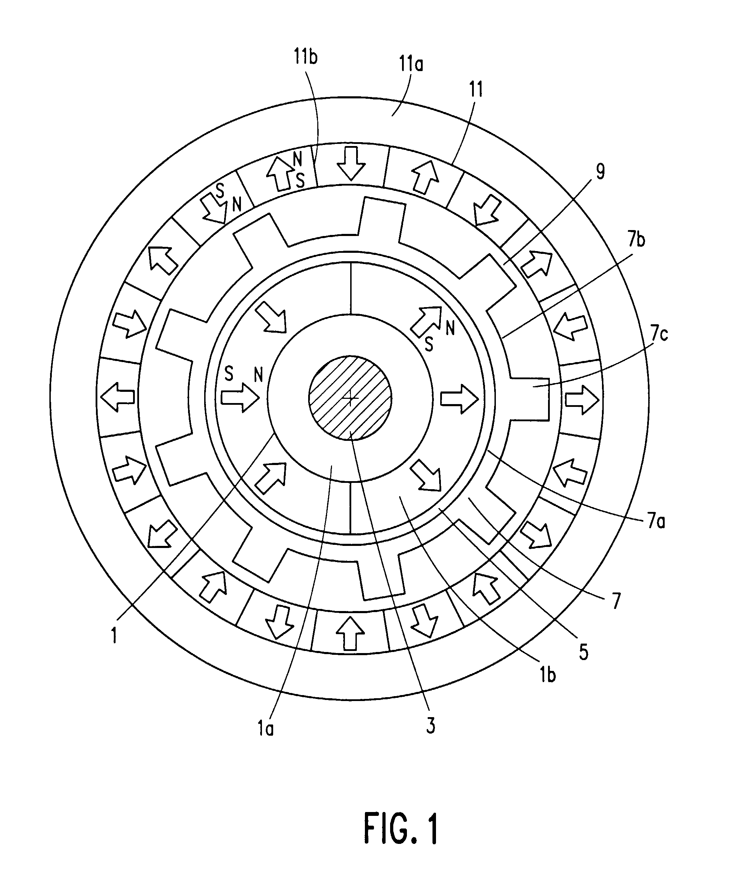

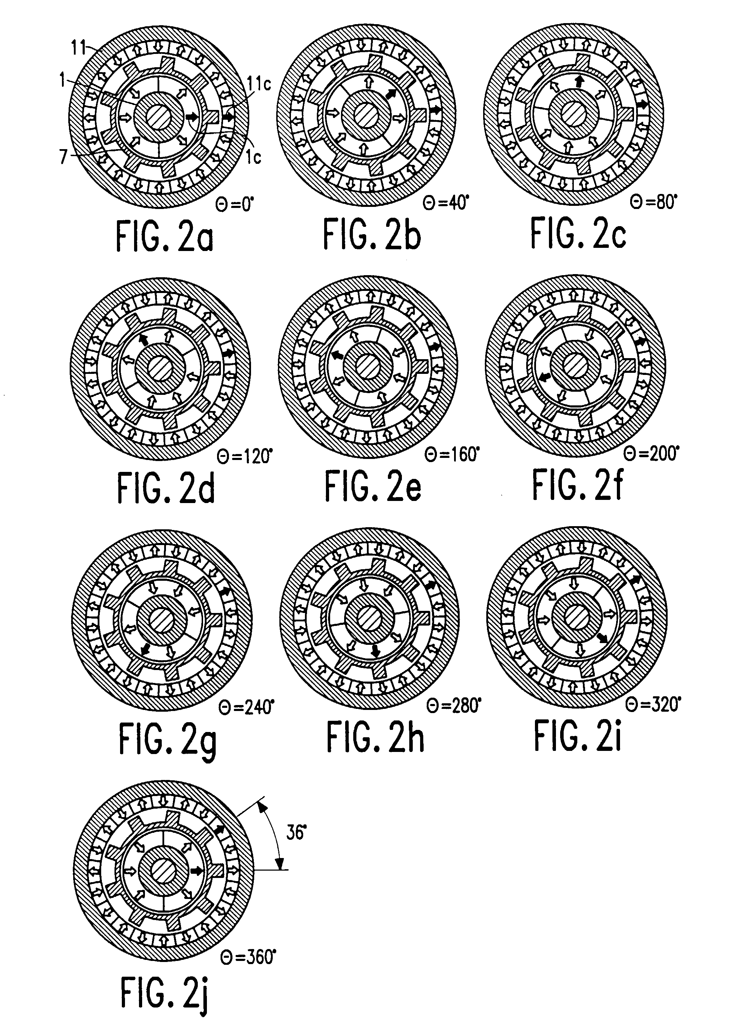

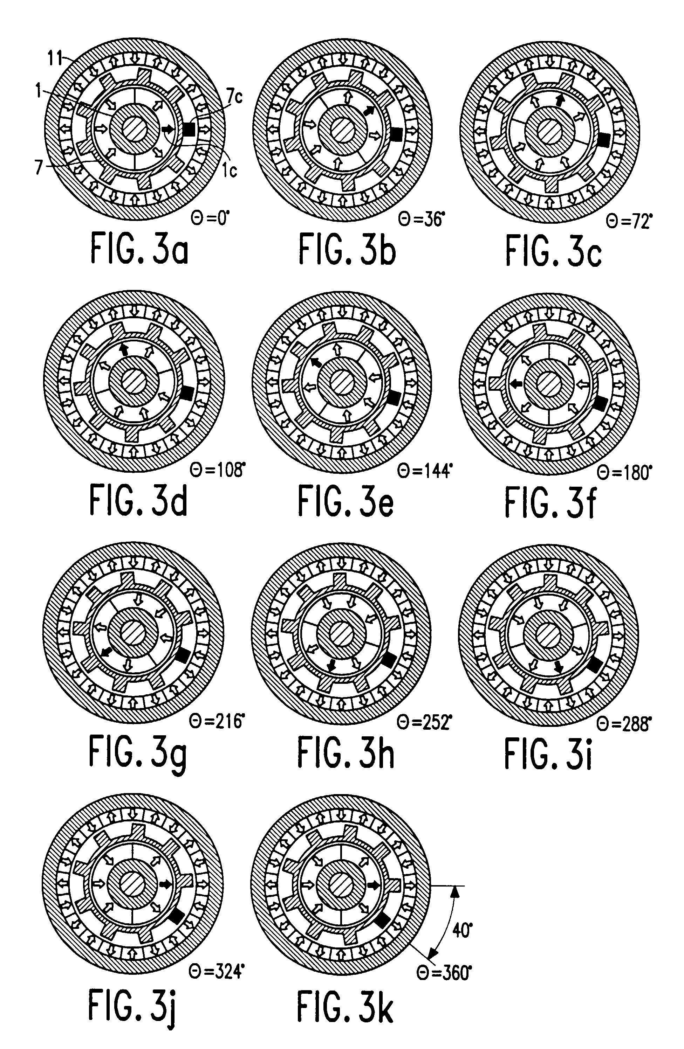

In Fig. 1 erkennt man einen Rotor 1, der als inneres Gebilde eines magnetischen Getriebes dient. Dieser Rotor 1 besteht aus einem auf eine Welle 3 aufgesetzten Eisenring 1a. Auf dem Eisenring 1a sitzen Permanentmagnete 1b, die auf der Außenseite des Rotors einen Nordpol und einen Südpol ausbilden. Der Rotor 1 wird unter Ausbildung eines Luftspaltes 5 von einem Weicheisenjoch 7 umgeben. Das Weicheisenjoch 7 ist an seiner Innenseite 7a glatt und ist an seiner Außenseite 7b mit Zähnen 7c versehen. Wiederum unter Ausbildung eines Luftspaltes 9 wird das Eisenjoch 7 vom Ring 11 umschlossen. Der Ring 11 dient als äußeres Gebilde des magnetischen Getriebes. Der Ring 11 besteht aus einem Eisenjoch 11a und einem zum Luftspalt 9 gelegenen Magnetring 11b, der an seiner Innenseite abwechselnd Nord- und Südpole ausbildet. Rotor 1, Weicheisenjoch 7 und äußerer Ring 11 sind konzentrisch zueinander angeordnet. In einer Ausführungsform nach Fig. 3 ist das Weicheisenjoch 7 mit einer nicht dargestellten Antriebswelle verbunden, und der äußere Ring 11 steht fest. In einer anderen Ausführungsform nach Fig. 2 ist der äußere Ring 11 mit einer nicht dargestellten Abtriebswelle verbunden, und das Weicheisenjoch 7 steht fest.

In den Ausführungen nach Fig. 1 bis 3 weist der Rotor 1 ein Paar von Nord- und Südpolen auf (p₁=1), das Weicheisenjoch 7 ist an seiner Innenseite 7a glatt (Z₁=0) und ist an seiner Außenseite 7b mit neun Zähnen 7c versehen (Z₂=9). Der äußere Ring 11 weist an seiner Innenseite zehn Paare von Nord- und Südpolen auf (p₂=10).

Fig. 2 zeigt einige Positionen aus der Drehung des äußeren Ringes 11, wenn der Rotor 1 gedreht wird und keine externen Kräfte auf den äußeren Ring 11 einwirken. Der Rotor 1 wird hierbei in Schritten von 40° gedreht. Zur Verdeutlichung ist auf dem Rotor 1 einer der Pfeile 1c dunkel unterlegt, die die lokale Magnetisierungsrichtung des Permanentmagneten bezeichnen. Ebenso ist auf dem äußeren Ring 11 einer der Pfeile 11c dunkel unterlegt, die die lokale Magnetisierungsrichtung des Permanentmagneten bezeichnen. Man erkennt aus Fig. 2 die Getriebewirkung, da sich der äußere Ring 11 um 36° entgegen dem Uhrzeigersinn dreht, wenn sich der Rotor 1 um 360° entgegen dem Uhrzeigersinn dreht.

Fig. 3 zeigt einige Positionen aus der Drehung des Weicheisenjoches 7, wenn der Rotor 1 gedreht wird und keine externen Kräfte auf das Weicheisenjoch 7 einwirken. Der Rotor 1 wird hierbei in Schritten von 36° gedreht. Zur Verdeutlichung ist auf dem Rotor 1 einer der Pfeile 1c dunkel unterlegt, die die lokale Magnetisierungsrichtung des Permanentmagneten bezeichnen. In ähnlicher Weise ist auf dem Weicheisenjoch 7 ein Zahn 7c dunkel unterlegt. Man erkennt aus Fig. 3 die Getriebewirkung, da sich das Weicheisenjoch 7 um 40° im Uhrzeigersinn dreht, wenn sich der Rotor 1 um 360° entgegen dem Uhrzeigersinn dreht.

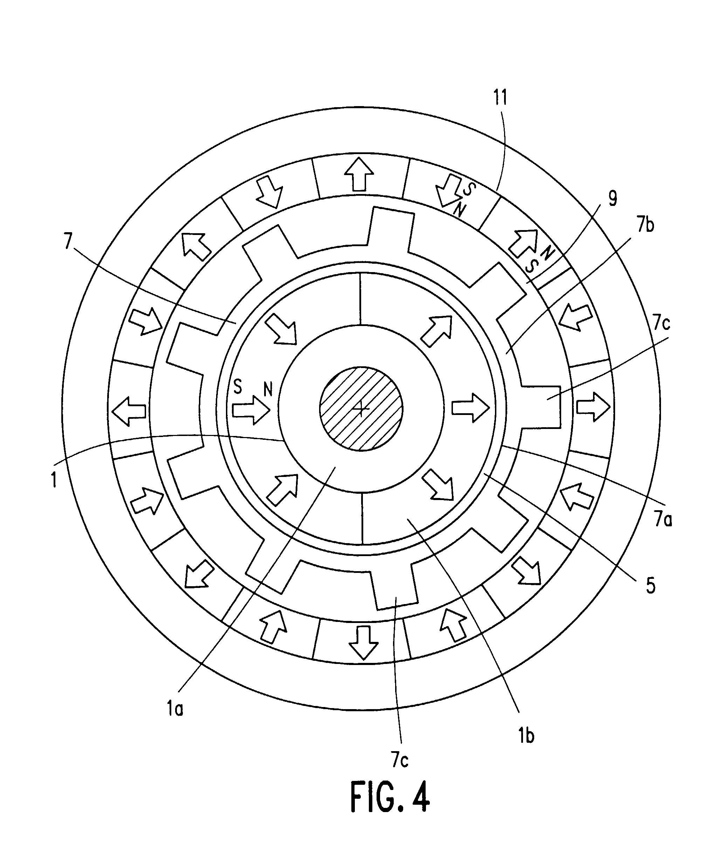

Fig. 4 entspricht Fig. 1. Der einzige Unterschied besteht darin, daß der äußere Ring 11 eine andere Zahl von Paaren von Nord- und Südpolen aufweist, nämlich p₂=8.

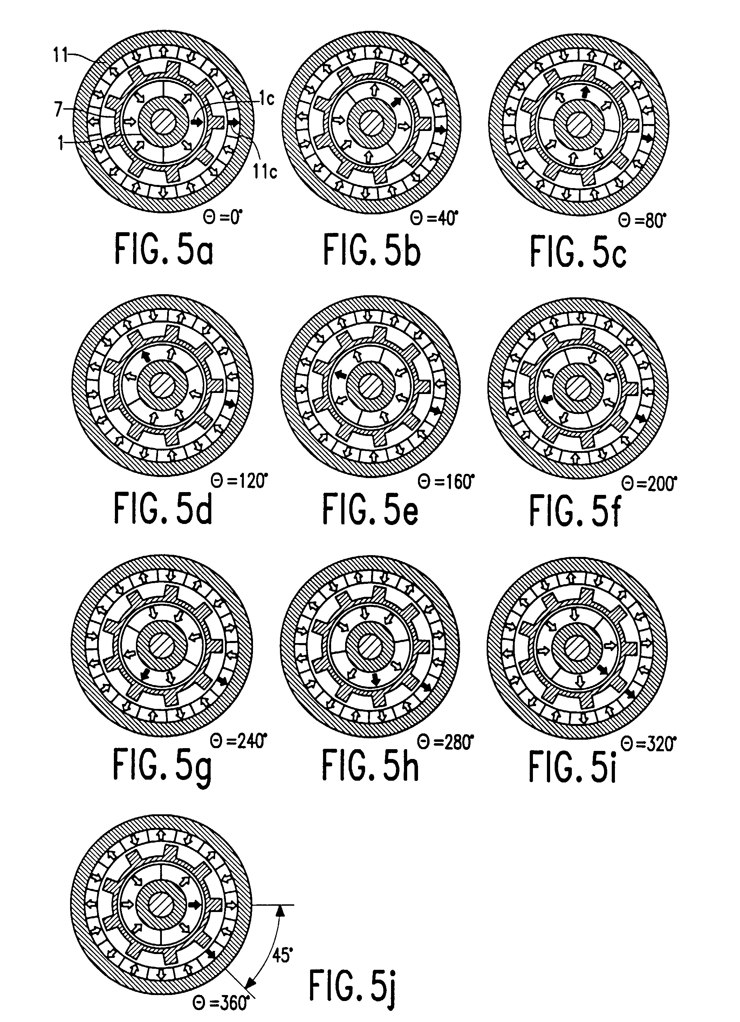

Fig. 5 zeigt für das magnetische Getriebe nach Fig. 4 einige Positionen aus der Drehung des äußeren Ringes 11, wenn der Rotor 1 gedreht wird und keine externen Kräfte auf den äußeren Ring 11 einwirken. Der Rotor 1 wird hierbei in Schritten von 40° gedreht. Zur Verdeutlichung ist auf dem Rotor 1 einer der Pfeile 1c dunkel unterlegt, die die lokale Magnetisierungsrichtung des Permanentmagneten bezeichnen. Ebenso ist auf dem äußeren Ring 11 einer der Pfeile 11c dunkel unterlegt, die die lokale Magnetisierungsrichtung des Permanentmagneten bezeichnen. Man erkennt aus Fig. 5 die Getriebewirkung, da sich der äußere Ring 11 um 45° im Uhrzeigersinn dreht, wenn sich der Rotor 1 um 360° entgegen dem Uhrzeigersinn dreht. Vergleicht man dies mit Fig. 2, so hat sich aufgrund der geänderten Zahl von Paaren von Nord- und Südpolen des äußeren Ringes 11 seine Drehrichtung umgekehrt.

Die bisher gezeigten Beispiele zeigen den allgemein gültigen Zusammenhang zwischen der Zahl der Paare von Nord- und Südpolen auf dem Rotor 1 (p₁) und auf dem äußeren Ring 11 (p₂) und dem Verhältnis von Drehmoment und Drehzahl dieser beiden Teile bei feststehendem Weicheisenjoch 7. Das Drehmoment T₁ auf den Rotor 1 und das Drehmoment T₂ auf den äußeren Ring 11 verhalten sich zueinander wie die jeweilige Anzahl von Paaren von Nord- und Südpolen: T₁/T₂ = p₁/p₂. Die Drehzahl n₁ des Rotors 1 und die Drehzahl n₂ des äußeren Ringes 11 verhalten sich umgekehrt zueinander wie die jeweilige Anzahl von Paaren von Nord- und Südpolen: n₁/n₂ = p₂/p₁.

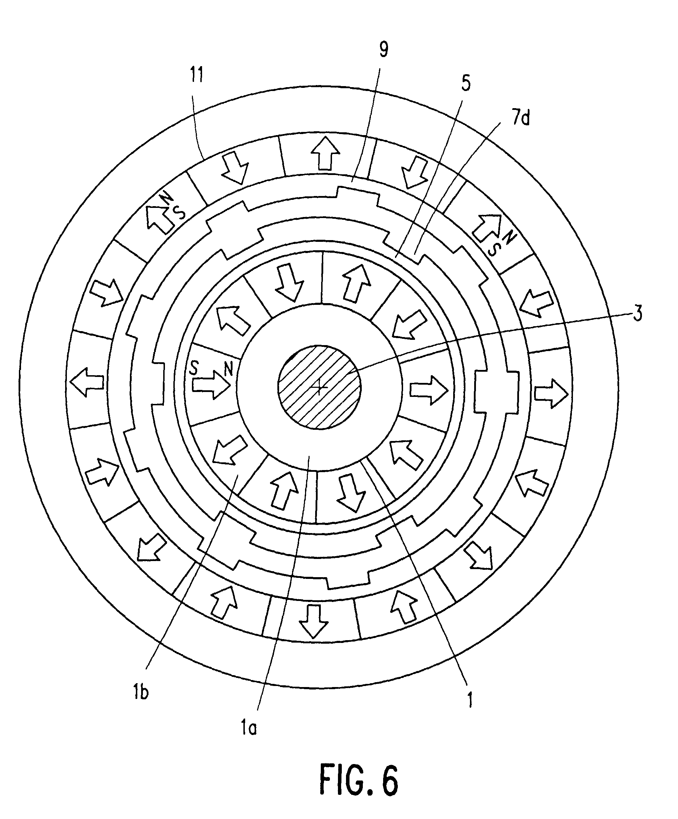

In Fig. 6 entspricht der äußere Ring 11 und die Konfiguration am Luftspalt 9 der Ausführungsform nach Fig. 4. Das Weicheisenjoch 7 hat auch am inneren Luftspalt 5 Zähne 7d. Die Zahl der Paare von Nord- und Südpolen des Magnetringes 1b ist in diesem Fall p₁=5. Die Zahl der Zähne des Weicheisenjoches 7 am inneren Luftspalt 5 ist in diesem Fall Z₁=6.

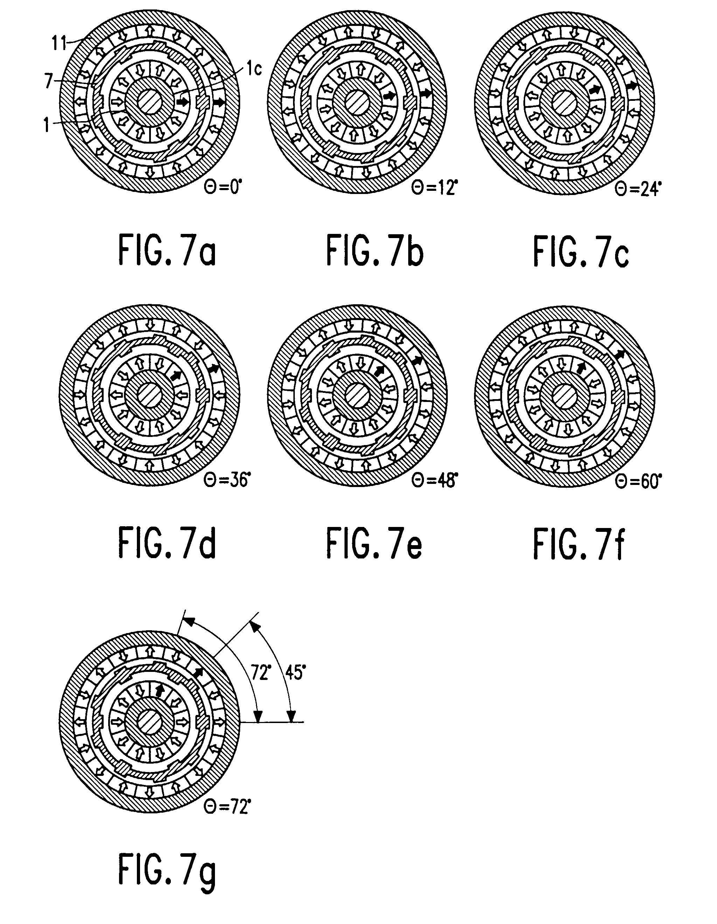

Fig. 7 zeigt für das magnetische Getriebe nach Fig. 6 einige Positionen aus der Drehung des äußeren Ringes 11, wenn der Rotor 1 gedreht wird und keine externen Kräfte auf den äußeren Ring 11 einwirken. Der Rotor 1 wird hierbei in Schritten von 12° gedreht. Zur Verdeutlichung ist auf dem Rotor 1 einer der Pfeile 1c dunkel unterlegt, die die lokale Magnetisierungsrichtung des Permanentmagneten bezeichnen. Ebenso ist auf dem äußeren Ring 11 einer der Pfeile 11c dunkel unterlegt, die die lokale Magnetisierungsrichtung des Permanentmagneten bezeichnen. Man erkennt aus Fig. 7 die Getriebewirkung, da sich der äußere Ring 11 um 45° entgegen dem Uhrzeigersinn dreht, wenn sich der Rotor 1 um 72° entgegen dem Uhrzeigersinn dreht.

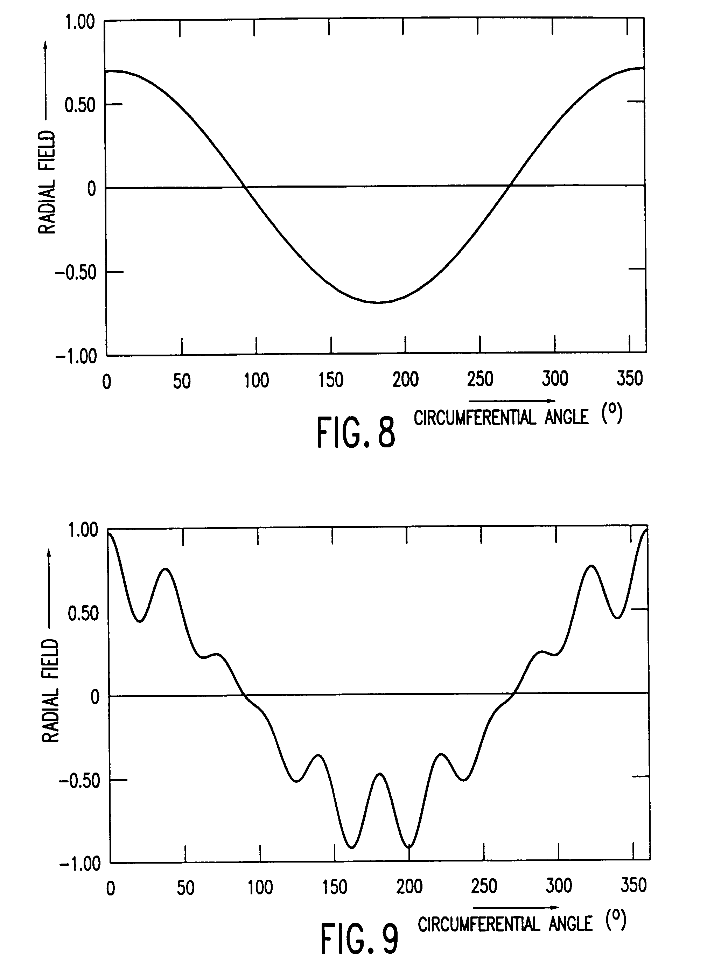

In Fig. 8 bis 11 ist die Radialkomponente des Feldes bei positiver Amplitude nach außen und bei negativer Amplitude nach innen gerichtet.

Fig. 8 zeigt in bezug auf Fig. 1 ein Diagramm der Radialkomponente des magnetischen Feldes, das vom inneren Gebilde auf der Innenseite des Eisenjoches erzeugt wird, als Funktion des Umfangswinkels.

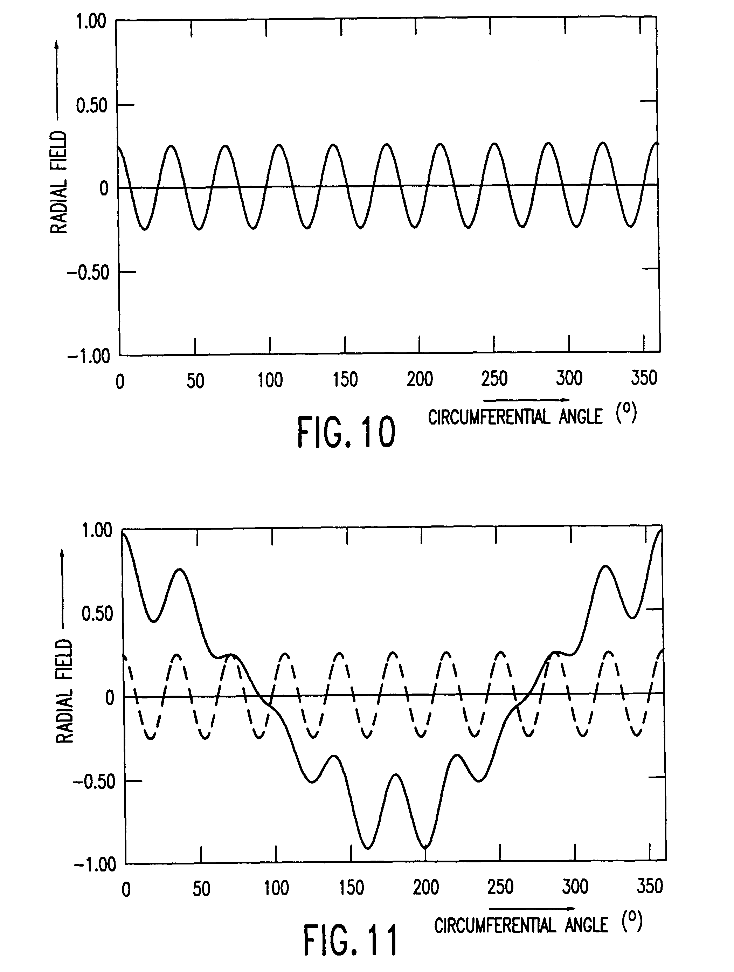

Fig. 9 zeigt in bezug auf Fig. 1 ein Diagramm der Radialkomponente des magnetischen Feldes, das vom inneren Gebilde auf der Außenseite des Eisenjoches erzeugt wird, als Funktion des Umfangswinkels. Dieses entsteht aus dem in Fig. 8 gezeigten Magnetfeld aufgrund der Modulation des Feldes durch das gezahnte Eisenjoch.

Fig. 10 zeigt in bezug auf Fig. 1 ein Diagramm der Radialkomponente des magnetischen Feldes, das vom äußeren Gebilde auf seiner Innenseite erzeugt wird, als Funktion des Umfangswinkels. Eine evtl. Verzerrung aufgrund der Verzahnung des Eisenjoches ist der Deutlichkeit halber weggelassen.

Fig. 11 zeigt gleichzeitig die Radialkomponenten der magnetischen Felder, die aufgrund der Wirkung des äußeren Gebildes (vergl. hierzu Fig. 10) und des inneren Gebildes (vergl. hierzu Fig. 9) im Luftspalt zwischen äußerem Gebilde und Eisenjoch entstehen. Hierbei ist zu erkennen, daß jeweils an denselben Positionen entlang des Umfanges Feldspitzen auftreten.

## Patentansprüche

1. Magnetisches Getriebe mit mehreren magnetisch zusammenwirkenden, relativ zueinander beweglichen Teilen (1, 7, 11), von denen eines mit einer Antriebswelle (3), eines mit einer Abtriebswelle verbunden ist und eines feststeht, wobei die von Permanentmagneten (1b, 11b) erzeugten Felder durch weichmagnetische, flußführende Teile (7) moduliert werden, von denen wenigstens eines ein gezahntes Eisenjoch (7) ist, wobei
a) sich auf beiden Seiten des Eisenjoches (7) Gebilde (1, 11) befinden, die auf der dem Eisenjoch zugewandten Seite mittels Permanentmagneten (1b, 11b) Magnetfelder erzeugen, die längs des Umfanges abwechselnd Nord- und Südpole aufweisen,
b) das Gebilde (1, 11) auf der einen Seite p₁ Paare von Nord- und Südpolen aufweist, wobei das Eisenjoch (7) auf der diesem Gebilde (1, 11) zugewandten Seite Z₁=p₁ ± N Zähne hat und N eine ganze Zahl ist, N=1,2,3...,
c) das Gebilde (11, 1) auf der anderen Seite p₂ Paare von Nord- und Südpolen aufweist, wobei das Eisenjoch (7) auf der diesem Gebilde (11, 1) zugewandten Seite Z₂=p₂ ± M Zähne hat, wobei M eine ganze Zahl (M=1,2,3...) und M gleich N ist,
dadurch gekennzeichnet, daß die Zähne (7c) auf dem Eisenjoch (7) gleichmäßig über den Umfang verteilt sind.

2. Magnetisches Getriebe nach Anspruch 1, dadurch gekennzeichnet, daß die Paare von Nord- und Südpolen gleichmäßig über den Umfang der Gebilde (1, 11) verteilt sind.

3. Magnetisches Gebilde nach einem der Ansprüche 1 und 2, dadurch gekennzeichnet, daß das Eisenjoch (7) und die Gebilde (1, 11) konzentrisch zueinander angeordnet sind.

4. Magnetisches Gebilde nach einem der Ansprüche 1 bis 3, dadurch gekennzeichnet, daß für den Fall einer Kombination von p₁ gleich N oder p₂ gleich N die Zahl der Zähne (7d) des Eisenjoches (7) auf dieser Seite Null ist.

5. Magnetisches Getriebe nach einem der Ansprüche 1 bis 4, dadurch gekennzeichnet, daß das Eisenjoch (7) feststeht.

6. Magnetisches Getriebe nach einem der Ansprüche 1 bis 5, dadurch gekennzeichnet*,* daß eines der beiden mittels Permanentmagneten (1b, 11b) Magnetfelder erzeugenden Gebilde (1, 11) feststeht.

7. Magnetisches Getriebe nach einem der Ansprüche 1 bis 6, dadurch gekennzeichnet, daß die Magnetfelder in den Luftspalten (5, 9) beiderseits des Eisenjoches (7) überwiegend radial verlaufen.

8. Magnetisches Getriebe nach einem der Ansprüche 1 bis 6, dadurch gekennzeichnet, daß die Magnetfelder in den Luftspalten (5, 9) beiderseits des Eisenjoches überwiegend axial verlaufen.

## Claims

1. A magnetic drive arrangement comprising a plurality of magnetically cooperating parts (1, 7, 11) which are movable relative to one another, one of said parts being connected to a drive shaft (3) and one of said parts being stationary, the fields produced by permanent magnets (1b, 11b) being modulated by soft-magnetic flux-carrying parts (7) which include at least one toothed iron yoke (7), in which
a) structures (1, 11) are arranged at both sides of the iron yoke (7) to generate magnetic fields by means permanent magnets (1b, 11b) at the sides facing the iron yoke, which magnetic fields alternately exhibit north poles and south poles along the circumference,
b) the structure (1, 11) at one side has p₁ pairs of north and south poles, the iron yoke (7) having Z₁ = p₁ ± N teeth at the side facing this structure (1, 11), N being an integer (N = 1, 2, 3, ...),
c) the structure (11, 1) at the other side has p₂ pairs of north and south poles, the iron yoke (7) having Z₂ = p₂ ± M teeth at the side facing this structure (11, 1), M being an integer (M = 1, 2, 3, ...) and M being equal to N,
characterized in that the teeth (7c) on the iron yoke (7) are uniformly spaced along the circumference.

2. A magnetic drive arrangement as claimed in Claim 1, characterized in that the pairs of north and south poles are uniformly spaced along the circumference of the structures (1, 11).

3. A magnetic drive arrangement as claimed in Claim 1 and 2, characterized in that the iron yoke (7) and the structures (1, 11) are concentric with one another.

4. A magnetic drive arrangement as claimed in any one of the Claims 1 to 3, characterized in that in the case of a combination of p₁ equal to N or p₂ equal to N the number of teeth (7d) of the iron yoke (7) at this side is zero.

5. A magnetic drive arrangement as claimed in any one of the Claims 1 to 4, characterized in that the iron yoke (7) is stationary.

6. A magnetic drive arrangement as claimed in any one of the Claims 1 to 5, characterized in that one of the two structures (1, 11) producing magnetic fields by means of permanent magnets (1b, 11b) is stationary.

7. A magnetic drive arrangement as claimed in any one of the Claims 1 to 6, characterized in that the magnetic fields in the air gaps (5, 9) at both sides of the iron yoke (7) extend substantially radially.

8. A magnetic drive arrangement as claimed in any one of the Claims 1 to 6, characterized in that the magnetic fields in the air gaps (5, 9) at both sides of the iron yoke (7) extend substantially axially.

## Revendications

1. Engrenage magnétique avec plusieurs pièces (1, 7, 11) mobiles relativement et coopérant magnétiquement dont l'une est reliée à un arbre de commande (3), une autre à un arbre de sortie et une autre est fixe, les champs produits par des aimants permanents (1b, 11b) étant modulés par des pièces (7) magnétiques douces conduisant le flux dont au moins une est une culasse en fer (7) dentée,
a) des formations (1, 11) se trouvant de part et d'autre de la culasse en fer (7) et produisant sur la face tournée vers la culasse en fer à l'aide d'aimants permanents (1b, 11b) des champs magnétiques présentant en alternance des pôles nord et sud le long de la périphérie,
b) la formation (1, 11) présentant d'un côté p₁ paires de pôles nord et sud, la culasse en fer (7) présentant sur la face tournée vers cette formation (1, 11) Z₁ = p₁ +/- N dents et N étant un nombre entier N = 1, 2, 3, ...,
c) la formation (11, 1) présente de l'autre côté p₂ paires de pôles nord et sud, la culasse en fer (7) possédant sur la face tournée vers cette formation (11, 1) Z₂ = p₂ +/- M dents, M étant un nombre entier (M = 1, 2, 3, ...) et M étant égal à N,
caractérisé en ce que les dents (7c) sont réparties uniformément sur la périphérie de la culasse en fer (7).

2. Engrenage magnétique selon la revendication 1, caractérisé en ce que les paires de pôles nord et sud sont réparties uniformément sur la périphérie de la formation (1, 11).

3. Engrenage magnétique selon l'une des revendications 1 et 2, caractérisé en ce que la culasse en fer (7) et la formation (1, 11) sont disposées concentriquement l'une à l'autre.

4. Engrenage magnétique selon l'une des revendications 1 à 3, caractérisé en ce que le nombre de dents (7d) de la culasse en fer (7) de ce côté est égal à zéro en cas de combinaison de p₁ = N ou p₂ = N.

5. Engrenage magnétique selon l'une des revendications 1 à 4, caractérisé en ce que la culasse en fer (7) est fixe.

6. Engrenage magnétique selon l'une des revendications 1 à 5, caractérisé en ce que l'une des deux formations (1, 11) produisant des champs magnétiques à l'aide des aimants permanents (1b, 11b) est fixe.

7. Engrenage magnétique selon l'une des revendications 1 à 6, caractérisé en ce que les champs magnétiques s'étendent en grande partie radialement dans les entrefers (5, 9) de part et d'autre de la culasse en fer (7).

8. Engrenage magnétique selon l'une des revendications 1 à 6, caractérisé en ce que les champs magnétiques dans les entrefers (5, 9) s'étendent en grande partie axialement de part et d'autre de la culasse en fer.
